# EUROPÄISCHE PATENTANMELDUNG

(11) **EP 1 603 029 A1**
(43) Veröffentlichungstag der Anmeldung: **07.12.2005**
(21) Anmeldenummer: 04012248.3
(22) Anmeldetag: 24.05.2004
(51) Int. Cl.: G06F 9/44

(54) **Multi-Monitor Unterstützung für MDI-Applikationen**

(71) Anmelder: SIEMENS AKTIENGESELLSCHAFT, 80333 München (DE)
(72) Erfinder: Windl, Helmut, 93077 Peisig (DE)

(57) **Zusammenfassung**

System und ein Verfahren mit dem unterschiedliche Fenster einer MDI Applikation innerhalb einer Applikation auf mehreren Bildschirmen gleichzeitig dargestellt werden können. Hierzu wird der Urspungs-Rahmen der MDI Applikation auf weiteren Bildschirmen instanziiert und die Fenster der Applikation mit den entsprechenden Dokumenten können anschließend in den instanziierten Folge-Rahmen der MDI-Applikation angezeigt werden. Dadurch ist die parallele, nebeneinandergeordnete Darstellung mehrerer Fenster auf mehreren Bildschirmen möglich, wobei die Auflösung der Fenster an die Bildschirmauflösung angepasst wird.

## Beschreibung

Die Erfindung betrifft ein System und ein Verfahren zum Öffnen und/oder Bearbeiten mehrerer Dokumente und/oder Dateien einer Software-Applikation.

Moderne Betriebssysteme wie MS Windows unterstützen den Betrieb von mehreren Bildschirmen mit unterschiedlichen Bildschirmauflösungen an einem Personal Computer, um die effektive Arbeitsfläche für den Nutzer zu vergrößern. Dadurch lassen sich auf den verschiedenen Bildschirmen mehrere Dokumente gleichzeitig darstellen, ohne dass zusätzliche Bedienschritte notwendig sind. Zum Beispiel ist das Schreiben einer E-Mail im MS Outlook unter Nutzung von Informationen aus einem Word-Dokument möglich, ohne dass zur Sichtung des Word-Dokuments zwischen den beiden Fenstern hin- und hergeschaltet werden muss. Die Möglichkeit, die Informationen auf verschiedenen Bildschirmen darzustellen, besteht, wenn die Inhalte und Informationen in getrennten Applikationen bzw. Anwendungen vorliegen. Die unterschiedlichen Anwendungen können dann auf verschiedenen Bildschirmen dargestellt werden.

Bei MDI-Applikationen (**M**ulti **D**okument **I**nterface), die ihre Informationen und Inhalte in mehreren Fenstern (Child Windows) innerhalb einer Applikation darstellen, ist die Visualisierung dieser Fenster auf getrennten Bildschirmen nur eingeschränkt möglich. Will ein Anwender zwei Bildschirme gleichzeitig nutzen, so besteht die einzige Möglichkeit dies umzusetzen darin, das Applikationsfenster der MDI-Applikation so zu verbreitern, dass es sich über beide Bildschirme hinzieht. Auf dieser vergrößerten Fläche lassen sich nun die offenen Fenster (Child Windows) frei anordnen. Der Nachteil dieser Methode besteht darin, dass für den Fall, dass beide Bildschirme eine unterschiedliche Auflösung besitzen, auf dem Bildschirm mit der geringeren Auflösung nur ein Ausschnitt der Applikation sichtbar ist. Eine einfache und effiziente Darstellung der Informationen der unterschiedlichen Fenster auf mehreren Bildschirmen ist bei MDI-Applikationen somit nicht möglich.

Aus der Veröffentlichung US 2003/0169304 A1 ist eine Methode und ein System bekannt, mit dessen Hilfe mehrere geöffnete Dokumente einer MDI-Applikation über ein Pull-Down-Menü eines aktiven Fensters der MDI-Applikation bearbeitet werden können. Hierbei sind die offenen Fenster der MDI-Applikation jedoch auf einem Bildschirm angeordnet.

Die der Erfindung zugrunde liegende Aufgabe besteht daher darin, die verschiedenen geöffneten Fenster einer MDI-Applikation auf mehreren Bildschirmen unabhängig voneinander anzeigen lassen zu können.

Die Aufgabe wird gelöst, durch ein System zum Öffnen und/oder Bearbeiten mehrerer Dokumente und/oder Dateien mindestens einer Software-Applikation, wobei auf einem Bildschirm innerhalb eines Ursprungs-Rahmens der mindestens einen Software-Applikation mehrere Fenster zur zeitgleichen Darstellung je eines geöffneten Dokuments und/oder einer geöffneten Datei vorgesehen sind, dadurch gekennzeichnet, dass das System eine Auswahlvorrichtung zur Auswahl mindestens eines weiteren nutzbaren Bildschirms, eine Bereitstellungsvorrichtung zur Bereitstellung von Folge-Rahmen der mindestens einen Software-Applikation auf den ausgewählten weiteren Bildschirmen und Anzeigemittel zur Anzeige mindestens eines, ein geöffnetes Dokument und/oder Datei darstellenden Fensters in dem/den bereitgestellten Folge-Rahmen der Software-Applikation auf einem ausgewählten weiteren Bildschirm aufweist.

Die Aufgabe wird weiterhin durch ein entsprechendes Verfahren zum Öffnen und/oder Bearbeiten mehrerer Dokumente und/oder Dateien mindestens einer Software-Applikation gelöst.

Der Erfindung liegt die Erkenntnis zugrunde, dass gerade im Umfeld von MDI-Applikationen, bei denen in der Regel mehrere Dokumente gleichzeitig vom Anwender geöffnet und bearbeitet werden, es von großem Vorteil ist, wenn die einzelnen Dokumente, welche jeweils in einem eigenen Fenster dargestellt sind, auf verschiedene Bildschirme verteilt werden können. Dies ermöglicht einem Anwender einen besseren Überblick über die vorhandenen Informationen und die dargestellten Informationen können vom Anwender besser genutzt werden. Wichtig ist hierbei, dass die Fenster vom Anwender steuerbar sind und dass die vorgegebene Bildschirmauflösung der unterschiedlichen Bildschirme und die entsprechende Farbtiefe optimal genutzt werden kann. Die Darstellung der Fenster mit den entsprechenden Informationen erfolgt hierbei dann unabhängig von der Bildschirmauflösung jeweils in der optimalen Größe.

Mittels des erfindungsgemäßen Systems kann der Benutzer auf einfache Weise den Ursprungs-Rahmen seiner MDI-Applikation auf mehreren Bildschirmen in Form von Folge-Rahmen anzeigen lassen. Hierbei wird im Rahmen der Erfindung auf eine MS Windows Funktionalität zurückgegriffen, die es ermöglicht, den Ursprungs-Rahmen einer Software-Anwendung zu replizieren. Die entsprechende Funktionalität wird in das erfindungsgemäße System übernommen, so dass sie für die MDI-Applikation zur Verfügung steht. In den entsprechenden Folge-Rahmen können dann Dokumente bzw. Fenster der Applikation verschoben werden. Die einzelnen Dokumente sind jeweils in ihren Fenstern nach Aktivierung innerhalb des Rahmens auf dem entsprechenden Bildschirm für den Benutzer bearbeitbar. Gleichzeitig kann der Nutzer alle Dokumente bzw. Fenster so anordnen, dass die Informationen ohne Überdeckung zeitgleich dargestellt werden können. Hierbei können auch mehrere Fenster in einen Folge-Rahmen verschoben werden.

Eine weitere vorteilhafte Ausbildung der Erfindung ist dadurch gekennzeichnet, dass die Auswahlvorrichtung und/oder die Bereitstellungsvorrichtung und/oder die Anzeigemittel im Betriebssystem implementiert sind. Hierbei ist besonders vorteilhaft, dass die Eigenschaft, dass mehrere Folge-Rahmen auf weiteren Bildschirmen instanziiert werden können, nicht notwendigerweise eine Eigenschaft der MDI-Applikation selbst sein muss. Die Möglichkeit der Instanziierung weiterer Folge-Rahmen bzw. der Replizierung des Ursprungs-Rahmens wird hierbei bereits durch das Betriebssystem bzw. das Operating System auf den entsprechenden Computer bereitgestellt. Die auf dem Rechner laufende MDI-Applikation benötigt in diesem Fall keine zusätzlichen eigenen Mittel, welche eine Auswahl und eine Bereitstellung eines entsprechenden Folge-Rahmens ermöglichen.

Eine weitere vorteilhafte Ausbildung der Erfindung ist dadurch gekennzeichnet, dass die Auswahlvorrichtung und/oder die Bereitstellungsvorrichtung und/oder die Anzeigemittel in der Software-Applikation implementiert sind. Im Fall, dass die Applikation bzw. die MDI-Applikation auf einem Rechner installiert ist, dessen Betriebssystem die Voraussetzung für die Auswahl und Bereitstellung von Folge-Rahmen nicht aufweist, ist es vorteilhaft, wenn diese Möglichkeit, Folge-Rahmen zu instanziieren, in der MDI-Applikation selbst implementiert ist. Hierdurch ist die Möglichkeit, Fenster auf mehreren Bildschirmen gleichzeitig darstellen zu können, unabhängig vom entsprechenden zugrunde liegenden Betriebssystem des Rechners gegeben.

Eine weitere vorteilhafte Ausbildung der Erfindung ist dadurch gekennzeichnet, dass die Anzeigemittel derart ausgebildet sind, dass die Anzeige der Fenster auf den ausgewählten weiteren Bildschirmen durch Ziehen in den/die bereitgestellten Folge-Rahmen der Software-Applikation erfolgt. Hierdurch wird dem Benutzer eine einfache Bedienmöglichkeit auf der Oberfläche an die Hand gegeben. Der Benutzer kann aktivierte Fenster mittels Drag & Drop, beispielsweise über die Mouse einfach in einen bereits geöffneten neuen Folgerahmen ziehen. Eine Bedienung über spezielle Funktionstasten und spezielle Befehle erübrigt sich hierbei. Ein einfaches Hin- und Herschieben auf der zur Verfügung stehenden Fläche und ein einfaches Anordnen der Fenster wird hierdurch ermöglicht.

Eine weitere vorteilhafte Ausbildung der Erfindung ist dadurch gekennzeichnet, dass die Anzeigemittel derart ausgebildet sind, dass die Anzeige der Fenster auf den ausgewählten weiteren Bildschirmen durch eine im Ursprungs-Rahmen der Software-Applikation bereitgestellte Auswahl erfolgt. Diese kann beispielsweise in Form eines Pull-Down-Menüs in der Toolbar bzw. dem Bedienelement des Ursprungs-Rahmens realisiert sein. Klickt der Benutzer auf ein entsprechendes Symbol, so werden ihm die auf unterschiedlichen Bildschirmen bereits implementierten Folge-Rahmen angezeigt. Für jedes Fenster, welches ein geöffnetes Dokument der MDI-Applikation repräsentiert, kann dann ausgewählt werden, auf welchem Bildschirm das entsprechende Fenster dargestellt werden soll. Beispielsweise kann dies in einem Pull-Down-Menü derart implementiert sein, dass eine Zuweisung der Fenster zu verschiedenen Bildschirmen über eine Pfeiltaste mit entsprechender Bildschirmnummerierung erfolgt.

Eine weitere vorteilhafte Ausbildung der Erfindung ist dadurch gekennzeichnet, dass das System derart ausgebildet ist, dass das zuletzt auf einem ausgewählten weiteren Bildschirm angezeigte Fenster aktiv ist. Vorteilhaft ist hierbei, dass das Dokument bzw. die Datei die zuletzt vom Benutzer einem Bildschirm zugewiesen wurde, auch gleich aktiv ist. Hierbei ist es egal, ob das Fenster dem Bildschirm durch Ziehen auf den neuen Bildschirm zugewiesen wurde, oder durch die Auswahl über die Toolbar. Der Benutzer hat auf diese Weise immer einen Überblick darüber, welches seiner Fenster gerade aktiv ist.

Eine weitere vorteilhafte Ausbildung der Erfindung ist dadurch gekennzeichnet, dass das System zur Anzeige von Bedienelementen des aktiven Fensters im bereitgestellten Folge-Rahmen der Software-Applikation vorgesehen ist. Nur das aktive Fenster kann somit vom Benutzer auch bearbeitet werden und er sieht sofort, welches Fenster aktiv ist, selbst wenn er einige Zeit nicht an den entsprechenden Bildschirmen tätig war. Nur das aktive Fenster verfügt über eine entsprechende Toolbar, die die Bedienung über Mouse-Aktionen ermöglicht.

Eine weitere vorteilhafte Ausbildung der Erfindung ist dadurch gekennzeichnet, dass das System derart ausgebildet, dass es eine unabhängige Positionierung und/oder Größenveränderung und/oder Schließung der bereitgestellten Folge-Rahmen ermöglicht. Hierdurch wird dem Benutzer ermöglicht, auf unterschiedlichen Bildschirmen die Fenster inklusive der Folge-Rahmen in unterschiedlichen Größen anzuzeigen. Eine größtmögliche Unabhängigkeit sowohl von der Bildschirmauflösung als auch weiteren äußeren Randbedingungen ist hierdurch gegeben. Die Informationen der einzelnen Fenster können hierdurch so angepasst werden, dass eine optimale Informationsdarstellung jederzeit gewährleistet ist.

Eine weitere vorteilhafte Ausbildung der Erfindung ist dadurch gekennzeichnet, dass die Anzeige eines Fensters bei Schließung des das Fenster beinhaltenden bereitgestellten Folge-Rahmens des weiteren Bildschirms im Ursprungs-Rahmen vorgesehen ist. Wird vom Anwender der einmal bereitgestellte Folge-Rahmen bzw. die entsprechende Instanz bzw. Replikation des Ursprungs-Rahmens wieder geschlossen, so wird die in dem Folge-Rahmen dargestellte Information bzw. das geöffnete Dokument nicht automatisch auch geschlossen. Vielmehr wird das entsprechende Fenster wieder in den Ursprungsrahmen also den Rahmen auf dem Rechner, auf dem die Applikation gestartet worden ist und von dem aus die Folge-Rahmen angelegt wurden, wieder angezeigt. Vorteilhaft ist hierbei, dass vorhandene Informationen nicht einfach verloren gehen und geöffnete Dokumente entsprechend auch geöffnet bleiben.

Eine weitere vorteilhafte Ausbildung der Erfindung ist dadurch gekennzeichnet, dass bei Schließung des letzten Rahmens der Software-Applikation die Beendigung der Software-Applikation vorgesehen ist. Hierdurch wird auf vorteilhafte Weise eine korrekte Schließung der gesamtem MDI-Applikation gewährleistet.

Im Folgenden wird die Erfindung anhand der in den Figuren dargestellten Ausführungsbeispiele näher beschrieben und erläutert.

Es zeigen:
- FIG 1: eine schematische Darstellung des Systems mit mehreren Bildschirmen,
- FIG 2: einen Ursprungs-Rahmen mit einer Auswahlvorrichtung,
- FIG 3: einen Ursprungs-Rahmen mit geöffneten Fenstern und Anzeigemitteln für die Fenster.

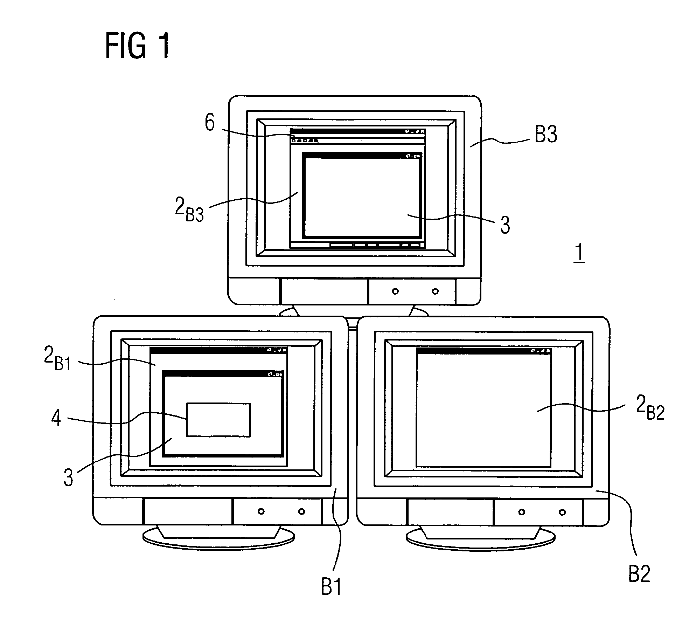

FIG 1 stellt das System 1 zum Öffnen und Bearbeiten mehrerer Dokumente 4 dar. Die Dokumente 4 sind jeweils in einem Fenster 3 der Applikation geöffnet. In dem System 1 existiert ein erster Bildschirm B1 auf dem die MDI-Applikation in einem Ursprungs-Rahmen 2_{B1} läuft. In dem System 1 existieren weitere Bildschirme B2, B3. Auf den weiteren Bildschirmen B2, B3 sind jeweils Folge-Rahmen 2_{B2}, 2_{B3} des Ursprungs-Rahmens 2_{B1} der MDI-Applikation angezeigt. Die Folge-Rahmen 2_{B2}, 2_{B3} werden auf allen ausgewählten Bildschirmen B2, B3 angezeigt. In den Folge-Rahmen 2_{B2}, 2_{B3} werden weitere Fenster 3 der MDI-Applikation zur Darstellung von Dokumenten oder Dateien 4 angezeigt.

In FIG 1 ist der Folge-Rahmen 2_{B3} des Bildschirms B3 aktiv. In diesem Rahmen ist die Toolbar in Form einer Bedienleiste mit Bedienelementen 6 ausgebildet. Ein Benutzer des Systems 1 kann, ausgehend vom Ursprungs-Rahmen 2_{B1} der MDI-Applikation, weitere Bildschirme B2, B3 auswählen und auf diesen Bildschirmen entsprechende Folge-Rahmen 2_{B2}, 2_{B3} zur Anzeige bringen. In den Folge-Rahmen 2_{B2}, 2_{B3} können entweder durch Ziehen mit Hilfe der Mouse oder über eine Auswahl weitere Fenster 3 zur Darstellung Informationen in den Dokumenten 4 angezeigt werden. Die in den Dokumenten 4 dargestellten Informationen können so gleichzeitig innerhalb einer Applikation auf mehreren Bildschirmen angezeigt werden.

Die Größe bzw. Auflösung der Bildschirme B1, B2, B3 wird dabei optimal ausgenutzt. Die geöffneten Fenster 3 mit den Dokumenten 4 sind dabei innerhalb einer MDI-Applikation geöffnet. Das aktive Fenster 3 ist zur Bearbeitung für den Benutzer zugänglich, da die Bedienelemente 6 im entsprechenden Folge-Rahmen 2_{B3} angezeigt werden. In den anderen Folge-Rahmen, welche derzeit kein aktives Fenster beinhalten, sind die entsprechenden Bedienelemente 6 ausgeblendet. Wird ein Fenster 3 in einen Rahmen 2 verschoben, so wird es auch aktiviert. Der Rahmen, in dem das aktive Fenster 3 enthalten ist, kennzeichnet sich dadurch, dass Menü, Toolbar und Stautusbar angezeigt sind.

Damit sind einerseits die für die Arbeit benötigten Informationen im Rahmen 2 mit dem aktiven Fenster 3 verfügbar und leicht zugänglich. Andererseits ist der Rahmen mit dem aktiven Fenster leicht erkennbar. Der Rahmen unterstützt die Eigenschaften wie Bildschirmauflösung oder Farbtiefe des Bildschirms, auf dem er angezeigt wird. Damit wird die bestmögliche Darstellung der Inhalte gewährleistet. Die einzelnen Rahmen 2 können unabhängig voneinander positioniert, in der Größe verändert oder geschlossen werden. Wird ein Rahmen geschlossen, so werden die darin angezeigten Fenster (Child Windows) wieder im Ursprungs-Rahmen 2_{B1} der Hauptapplikation angezeigt. Beim Schließen des letzten Rahmens 2 wird auch die Applikation beendet.

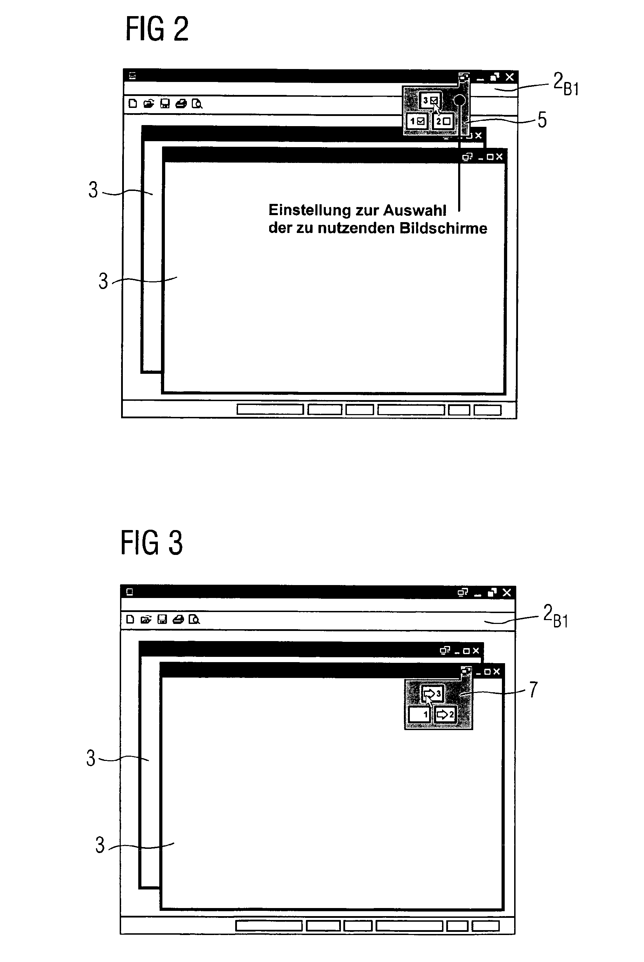

FIG 2 zeigt einen Ursprungs-Rahmen 2_{B1}. In dem Ursprungs-Rahmen 2_{B1} sind zwei Fenster 3 (Child Windows) geöffnet, welche Daten bzw. Informationen anzeigen. Im Ursprungs-Rahmen 2_{B1} ist eine Auswahlvorrichtung 5 in der Toolbar angezeigt. Die Auswahlvorrichtung 5 kann in Form eines Pull-Down-Menüs ausgebildet sein. Dem Benutzer des Systems 1 werden dann bei Aufblättern des Pull-Down-Menüs weitere Bildschirme B2, B3 angezeigt, welche für die Nutzung durch die MDI-Applikation zur Verfügung stehen. Aus der Auswahlvorrichtung 5 kann der Benutzer beispielsweise durch Anklicken oder durch Setzen eines Häkchens weitere Bildschirme für die Nutzung hinzufügen. Sind die weiteren Bildschirme B2, B3 durch die Auswahlvorrichtung 5 ausgewählt worden, so können Folge-Rahmen 2_{B2}, 2_{B3} auf den Bildschirmen zur Ansicht gebracht werden und Dokumente in den entsprechenden Fenstern 3 dargestellt werden.

FIG 3 zeigt einen Ursprungs-Rahmen 2_{B1} mit zwei geöffneten Fenstern 3 zur Darstellung von Informationen. In einem der Fenster 3 ist ein als Pull-Down-Menü ausgebildetes Anzeigemittel 7 dargestellt. Hier werden dem Benutzer des Systems 1 bereits ausgewählte Bildschirme B2, B3 angezeigt. Durch Anklicken eines der zur Verfügung stehenden Bildschirme B2, B3 im entsprechenden Fenster 3 wird das Fenster 3 mit samt der sich darin befindenden Information auf den entsprechenden Bildschirm B2, B3 verlagert und kommt dort zur Ansicht. Alternativ können die Fenster auf die neuen ausgewählten Bildschirme B2, B3 auch durch Ziehen mit der Mouse zur Anzeige gebracht werden.

Zusammenfassend betrifft die Erfindung ein System und ein Verfahren mit dem unterschiedliche Fenster einer MDI Applikation innerhalb einer Applikation auf mehreren Bildschirmen gleichzeitig dargestellt werden können. Hierzu wird der Urspungs-Rahmen der MDI Applikation auf weiteren Bildschirmen instanziiert und die Fenster der Applikation mit den entsprechenden Dokumenten können anschließend in den instanziierten Folge-Rahmen der MDI-Applikation angezeigt werden. Dadurch ist die parallele, nebeneinandergeordnete Darstellung mehrerer Fenster auf mehreren Bildschirmen möglich, wobei die Auflösung der Fenster an die Bildschirmauflösung angepasst wird.

## Patentansprüche

1. System (1) zum Öffnen und/oder Bearbeiten mehrerer Dokumente und/oder Dateien (4) mindestens einer Softwareapplikation, wobei auf einem Bildschirm (B1) innerhalb eines Ursprungs-Rahmens (2_{B1}) der mindestens einen Softwareapplikation mehrere Fenster (3) zur zeitgleichen Darstellung je eines geöffneten Dokuments und/oder einer geöffneten Datei (4) vorgesehen sind,
**dadurch gekennzeichnet, dass** das System
- eine Auswahlvorrichtung (5) zur Auswahl mindestens eines weiteren nutzbaren Bildschirms (B2, B3),
- eine Bereitstellungsvorrichtung zur Bereitstellung von Folge-Rahmen (2_{B2}, 2_{B3}) der mindestens einen Softwareapplikation auf den ausgewählten weiteren Bildschirmen (B2, B3) und
- Anzeigemittel zur Anzeige mindestens eines, ein geöffnetes Dokument und/oder Datei (4) darstellenden Fensters (3) in dem/den bereitgestellten Folge-Rahmen (2_{B2}, 2_{B3}) der Softwareapplikation auf einem ausgewählten weiteren Bildschirm (B2, B3) aufweist.

2. System nach Anspruch 1,
**dadurch gekennzeichnet, dass** die Auswahlvorrichtung (5) und/oder die Bereitstellungsvorrichtung und/oder die Anzeigemittel im Betriebssystem implementiert sind.

3. System nach Anspruch 1,
**dadurch gekennzeichnet, dass** die Auswahlvorrichtung (5) und/oder die Bereitstellungsvorrichtung und/oder die Anzeigemittel in der Softwareapplikation implementiert sind.

4. System nach einem der vorhergehenden Ansprüche,
**dadurch gekennzeichnet, dass** die Anzeigemittel derart ausgebildet sind, dass die Anzeige der Fenster (3) auf den ausgewählten weiteren Bildschirmen (B2, B3) durch Ziehen in den/die bereitgestellten Folge-Rahmen (2_{B2}, 2_{B3}) der Software-applikation erfolgt.

5. System nach einem der Ansprüche 1 bis 4,
**dadurch gekennzeichnet, dass** die Anzeigemittel derart ausgebildet sind, dass die Anzeige der Fenster (3) auf den ausgewählten weiteren Bildschirmen (B2, B3) durch eine im Ursprungs-Rahmen (2_{B2}, 2_{B3}) der Softwareapplikation bereitgestellte Auswahl erfolgt.

6. System nach einem der vorhergehenden Ansprüche,
**dadurch gekennzeichnet, dass** das System derart ausgebildet ist, dass das zuletzt auf einem ausgewählten weiteren Bildschirm (B2, B3) angezeigte Fenster (3) aktiv ist.

7. System nach einem der vorhergehenden Ansprüche,
**dadurch gekennzeichnet, dass** das System zur Anzeige von Bedienelementen (6) des aktiven Fensters (3) im bereitgestellten Folge-Rahmen (2_{B2}, 2_{B3}) der Softwareapplikation vorgesehen ist.

8. System nach einem der vorhergehenden Ansprüche,
**dadurch gekennzeichnet, dass** das System derart ausgebildet ist, dass es eine unabhängige Positionierung und/oder Größenveränderung und/oder Schließung der bereitgestellten Folge-Rahmen (2_{B2}, 2_{B3}) ermöglicht.

9. System nach einem der vorhergehenden Ansprüche,
**dadurch gekennzeichnet, dass** die Anzeige eines Fensters (3) bei Schließung des das Fenster beinhaltenden bereitgestellten Folge-Rahmens (2_{B2}, 2_{B3}) des weiteren Bildschirms (B2, B3) im Ursprungs-Rahmen vorgesehen ist.

10. System nach einem der vorhergehenden Ansprüche,
**dadurch gekennzeichnet, dass** bei Schließung des letzten Rahmens (2_{B1}, 2_{B2}, 2_{B3}) der Softwareapplikation die Beendigung der Softwareapplikation vorgesehen ist.

11. Verfahren zum Öffnen und/oder Bearbeiten mehrerer Dokumente und/oder Dateien (4) mindestens einer Softwareapplikation, bei dem geöffnete Dokumente und/oder eine geöffnete Dateien (4) auf einem Bildschirm (B1) innerhalb eines Ursprungs-Rahmens (2_{B1}) der mindestens einen Softwareapplikation in je einem Fenster (3) zeitgleich dargestellt werden,
**dadurch gekennzeichnet, dass**
- mindestens ein weiterer nutzbarer Bildschirm (B2, B3) ausgewählt wird,
- Folge-Rahmen (2_{B2}, 2_{B3}) der mindestens einen Softwareapplikation auf den ausgewählten weiteren Bildschirmen (B2, B3) bereitgestellt werden und
- mindestens ein, ein geöffnetes Dokument und/oder Datei (4) darstellendes Fenster (3) in dem/den bereitgestellten Folge-Rahmen (2_{B2}, 2_{B3}) der Softwareapplikation auf einem ausgewählten weiteren Bildschirm (B2, B3) angezeigt wird.

12. Verfahren nach Anspruch 11,
**dadurch gekennzeichnet, dass** das Betriebssystem die Auswahlvorrichtung (5) und/oder die Bereitstellungsvorrichtung und/oder die Anzeigemittel bereitstellt.

13. Verfahren nach Anspruch 11,
**dadurch gekennzeichnet, dass** die Softwareapplikation die Auswahlvorrichtung (5) und/oder die Bereitstellungsvorrichtung und/oder die Anzeigemittel bereitstellt.

14. Verfahren nach einem der Ansprüche 11 bis 13,
**dadurch gekennzeichnet, dass** die Anzeige der Fenster (3) auf den ausgewählten Bildschirmen (B2, B3) durch Ziehen in den bereitgestellten Folge-Rahmen (2_{B2}, 2_{B3}) der Softwareapplikation erfolgt.

15. Verfahren nach einem der Ansprüche 11 bis 13,
**dadurch gekennzeichnet, dass** die Anzeige der Fenster (3) auf den ausgewählten weiteren Bildschirmen (B2, B3) durch eine im Ursprungs-Rahmen (2_{B2}, 2_{B3}) der Softwareapplikation bereitgestellte Auswahl erfolgt.

16. Verfahren nach einem der Ansprüche 11 bis 15,
**dadurch gekennzeichnet, dass** das zuletzt auf einem ausgewählten Bildschirm (B2, B3) angezeigte Fenster (3) aktiviert ist.

17. Verfahren nach einem der Ansprüche 11 bis 16,
**dadurch gekennzeichnet, dass** die Bedienelemente (6) des aktiven Fensters (3) im bereitgestellten Folge-Rahmen (2_{B2}, 2_{B3}) der Softwareapplikation angezeigt werden.

18. Verfahren nach einem der Ansprüche 11 bis 17,
**dadurch gekennzeichnet, dass** die bereitgestellten Folge-Rahmen (2_{B2}, 2_{B3}) unabhängig voneinander auf den ausgewählten Bildschirmen positioniert und/oder größenverändert und/oder geschlossen werden können.

19. Verfahren nach einem der Ansprüche 11 bis 18,
**dadurch gekennzeichnet, dass** ein Fenster (3) bei Schließung des das Fenster beinhaltenden bereitgestellten Folge-Rahmens (2_{B2}, 2_{B3}) im ursprünglichen Rahmen (2_{B1}) angezeigt wird.

20. Verfahren nach einem der Ansprüche 11 bis 19,
**dadurch gekennzeichnet, dass** die Softwareapplikation bei Schließung des letzten Rahmens (2_{B1}, 2_{B2}, 2_{B3}) der Softwareapplikation beendigt wird.
